# DEMANDE DE BREVET EUROPEEN

(11) **EP 3 617 950 A1**
(43) Date de publication de la demande: **04.03.2020**
(21) Numéro de dépôt: 19194429.7
(22) Date de dépôt: 29.08.2019
(51) Int. Cl.: G06K 19/06

(54) **SYSTÈME DE DIFFUSION D'INFORMATIONS RELATIVES À UN OBJET**

(30) Priorité: 31.08.2018 FR 1857832
(71) Demandeur: PHILIPPE GUESDON CONCEPT, 85500 Les Herbiers (FR)
(72) Inventeur: GUESDON, Philippe, 85500 LES HERBIERS (FR)
(74) Mandataire: Tournel, Jean Louis

(57) **Abrégé**

L'invention a pour objet un système de diffusion d'informations comprenant un objet(2), un code (3) d'identification de l'objet présenté sur une zone non plane de l'objet, un moyen (5) de reconnaissance du code, un moyen (6)de mise en relation de l'information correspondant au code avec un moyen (7)de diffusion de la dite information, ce système étant caractérisé en ce que le code (3) est non détachable de l'objet et il est issu d'un élément décoratif de l'objet construit à partir d'un dessin de l'élément décoratif et reconnu par reconnaissance visuelle.

## Description

L'invention se rapporte à un système de diffusion d'une information concernant un objet.

Pour vendre un objet, il est accompagné d'informations qui sont d'une part obligatoires (prix , contenance, poids , composition, provenance etc) et d'autre part divulguées à titre publicitaire, par exemple, pour présenter l'objet à son avantage.

Le fabricant ou le vendeur dispose alors du contenant (boite ou l'emballage destiné à le contenir) pour écrire toute l'information mais l'espace disponible s'avère souvent restrictif car il y a peu de place disponible.

Il est connu, pour ces objets où la place manque, de reporter ces informations sur une étiquette indépendante ou accrochée sur l'objet sur laquelle on inscrit les informations. La quantité d'informations reste restreinte. Ces informations sont statiques et peu d'acheteurs se préoccupe de prendre connaissance de la dite information.

On connait le code barre comme un moyen permettant à un objet d'être identifié électroniquement pour diffuser de l'information sur un moyen de visualisation électronique.

On sait mettre en relation un code barre et une ou plusieurs informations qui seront alors accessibles via un lecteur de code barre. Ces codes-barres sont utilisés principalement pour obtenir le prix et le nombre d'article en stock. Ils servent à la gestion des objets.

Il est connu les QR codes qui permettent plus d'informations et qui activent des fonctions par exemple l'accès à un serveur via une lecture du QR code avec son téléphone mobile, sa tablette.

Il s'agit d'un code barre, à deux dimensions constitué de modules noirs répartis sur un fond blanc.

Ceci est très intéressant mais se pose le problème de le lier mécaniquement à l'objet. Ce code-barres peut être imprimé sur l'objet ou imprimé sur une étiquette apposée sur l'objet.

Ce code est peu esthétique et les fabricants cherchent à le placer de manière provisoire sur l'objet en une zone peu visible ce qui va à l'encontre du but recherché. Ils préfèrent, par exemple, l'apposer sur la boite à chaussure et non pas sur la chaussure. Ce code est souvent imprimé sur une étiquette qui est fixée provisoirement sur l'objet par exemple à l'aide d'un lien ou d'un adhésif.

On note qu'il est difficile de le fixer par encollage sur une surface de type tissu ou non plane. En effet lorsque le code QR est plié ou courbe, la lecture en est plus délicate.

Ces codes sont des éléments rapportés sur un objet. Ils sont distincts de l'esthétique de l'objet et se voient comme un élément ajouté ne faisant pas parti de l'objet. Le QR code est un élément généralement séparable après acquisition de l'objet sauf s'il est imprimé sur une feuille papier d'une revue ou autre. Du fait de leur vocation provisoire, l'acquéreur du produit dissocie rapidement l'étiquette de l'objet pour ne plus altérer l'esthétique.

Le code doit être fixé sur l'objet et lorsque ce support n'est pas lisse mais présente un relief, la fixation n'est pas bonne, ni aisée.

On connait EP-A- 1.061.467 un procédé de marquage d'une surface courbe avec un code barre.

On connait WO-A-2016/077934 un procédé d'authentifications utilisant les « défauts » qui sont reproductibles et apparaissent systématiquement sur l'objet lors de sa fabrication. Ces défauts encore appelés signatures ne sont pas volontaires. Lorsque l'objet porte se défaut il est considéré comme authentique car il n'apparait pas s'il avait été fabriqué par un autre système ou procédé.

L'invention vise à multiplier les codes et à rendre ceux-ci discrets.

A cet effet, l'invention se rapporte à un système de diffusion d'une information concernant un objet utilisant un code d'identification de l'objet associé sur l'objet en une zone non plane, et comprenant un moyen de reconnaissance du code d'identification précité, un moyen de mise en relation de l'information correspondant au code avec un moyen de diffusion de la dite information, ce système étant caractérisé en ce que le code est non détachable de l'objet et il est issu d'un élément décoratif de l'objet construit à partir d'un dessin de l'élément décoratif et reconnu par reconnaissance visuelle.

L'invention sera bien comprise à l'aide de la description ci jointe en regard du dessin qui représente :

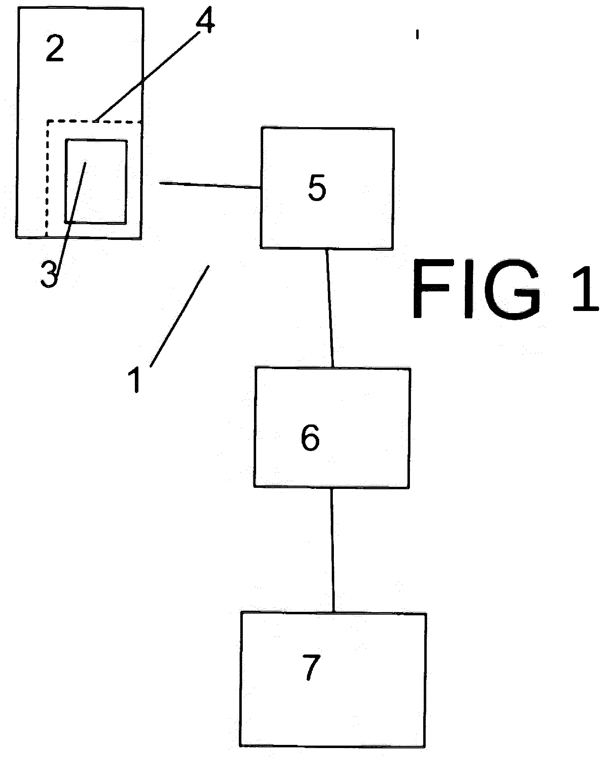

FIG 1 un système de diffusion selon l'invention
FIG 2 un exemple d'objet en construction selon l'invention
FIG 3 un plat décoré avec code.
FIG 4 un exemple d'un élément décoratif utilisable pour constituer un code.

En se reportant au dessin, on voit un système 1 de diffusion d'informations concernant un objet 2.

Cet objet se distingue des autres par sa forme et/ou ses décorations et/ou des combinaisons de couleurs etc.

Le système comprend un code d'identification 3 présenté par un support 4 matériel associé sur une zone non plane de l'objet, un moyen 5 de reconnaissance du code, un moyen 6 de mise en relation de l'information ou des informations correspondant au code avec un moyen 7 de diffusion de la dite information.

Par moyen 6 de mise en relation de l'information et le moyen de diffusion, on comprendra une structure de communication (« Wifi », « 4G », fibre optique...), avec des moyens de stockage de l'information et de traitement de données.

Par zone non plane, on comprendra une surface courbe ou une zone présentant des aspérités ou des lacunes ou non homogène à l'exemple d'un tricot ou d'un tissu ou du cuir grainé ou de la poterie etc...

Une application permet après lecture du code et identification de visualiser les informations relatives à l'objet présentant ledit code qui sont stockées dans une mémoire telle la mémoire d'un serveur. Ces informations peuvent être des informations statiques et/ou dynamiques (vidéo,gifs). Par application, on comprendra un programme informatique.

Selon une caractéristique le code 3 est non détachable de l'objet et il est issu d'un élément décoratif de l'objet construit à partir d'un dessin de l'élément décoratif et reconnu par reconnaissance visuelle.

On va donc utiliser un ou plusieurs éléments graphiques de l'objet pour définir le code correspondant à l'objet. L'objet est souvent dessiné avant d'être fabriqué. A partir d'un dessin de l'objet, on peut en extraire une forme qui sera choisie comme le code. Le fabriquant peut choisir le motif ou la partie décorative de l'objet qu'il va utiliser pour construire le code. On peut simplifier la forme pour obtenir un code qui sera plus facile à identifier par le logiciel de recherche car beaucoup moins de points à traiter lors de la recherche parmi les codes enregistrés.

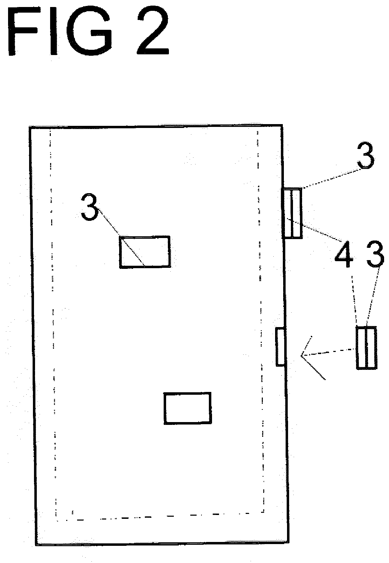

Le support peut être de même nature que l'objet (chaussure cuir, support cuir) ou différent (ceinture cuir /boucle de ceinture métal).La figure 2 montre un vase présentant des motifs décoratifs. Un de ces motifs va être intégré dans l'objet.

Ainsi, le code 3 est intégré totalement dans l'objet et il n'est pas nécessaire de le dissimuler. Bien au contraire, il sera éventuellement utile d'indiquer la zone de l'objet présentant le code qu'il faudra viser avec son téléphone pour lire ce code. Prenons par exemple une chaussure de sport. L'empeigne est souvent agrémentée par des logos ou autres éléments décoratifs plats ou en relief. L'un de ces éléments décoratifs peut ainsi constituer un code.

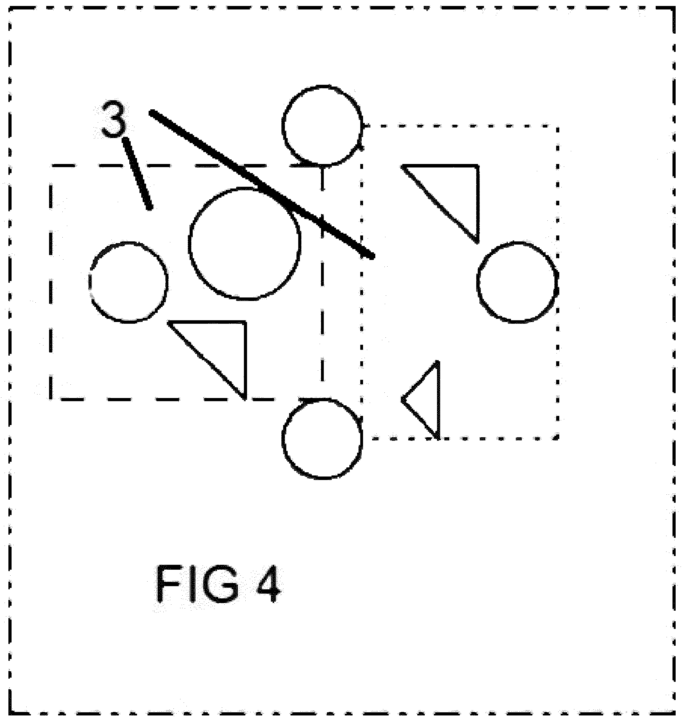

On a représenté en figure 4 un motif composé de trois triangles et cinq cercles.

L'ensemble des figures géométriques peut constituer un code mais le sous ensemble constitué par deux triangles et un cercle ou le sous ensemble constitué par deux cercles et un triangle peuvent également constituer des codes.

On comprend qu'en simplifiant le dessin pour le choix du code on aura facilité le traitement informatique de la recherche. Le dessin esthétique de la figure 4 est un dessin fait avec des traits mais il pourrait s'agir de taches de couleur (pantone).

Le créateur a le choix du graphique qui sera utilisé comme code. Le code est au moins une partie du dessin de l'élément décoratif. Il s'agit souvent de motif rapporté lors du montage de la chaussure mais qui n'ont pas vocation à être retiré après l'achat.

Par exemple pour une cruche cela peut être la forme générale de la cruche ou l'anse de celle-ci.

On peut facilement imaginer que le code est semblable à une pièce d'un puzzle. C'est un élément intégré dans l'objet. Le vase représenté en figure 2 montre quatre éléments décoratifs constituant un code et l'un de ces codes n'est pas encore intégré.

Le code est un motif ou élément décoratif en 2D (faible épaisseur) ou en 3D.

Le code peut être un élément décoratif fait aux crochets ou par tricotage ou broderie, ou par usinage, ou moulage ou constructions plus élaborées ou par peinture ou par sérigraphie ou par tampographie, par émaillage, par sublimation, par transfert, etc .

Le code est donc fixé sur l'objet par collage (liaison chimique) ou par un moyen mécanique (bouton pression, aimant, dispositif à boucles et crochets par exemple connu sous la marque VELCRO). Il n'a pas vocation à être associé provisoirement à l'objet comme le serait une étiquette. On comprend que si ce code est placé par sublimation ou transfert, il n'est plus détachable.

Le code peut être composé par des lignes droites, des courbes ou une combinaison de couleur type pantone d'un motif, d'une photo, d'une image ou encore d'un blason.IL s'agit d'un dessin ou élément décoratif construit.

Cet élément décoratif ayant fonction de code est alors issu d'un dessin de préférence manuel ou d'un dessin personnalisé (re)construit avec un logiciel pour en obtenir une image numérique enrichie qui pourra être reconnue par un logiciel de reconnaissance visuel intégré dans une application par exemple pour téléphone mobile ou tablette ou terminal mobile.

Le fait de créer une image enrichie à partir d'un dessin manuel ou personnalisé donc original minimise le risque de créer deux codes identiques. Une image enrichie est une image interactive comportant des liens informatiques pour l'accès à de la documentation. Le code permet cet accès.

Les objets de la vie courante peuvent être pourvus d'un code tels que les vêtements, casquette, sac, ceinture, bol, vase, ballon, perceuse, aspirateur, bijoux, ornements, voitures, bateaux, un verre, stylo, un « mug » , des meubles, fenêtres, tables, lampes, portes, etc...

Ce qui est intéressant c'est que le code se fond dans l'objet et reste donc intégré à l'objet. Ce code peut ainsi être lu même après une longue utilisation de l'objet. L'information accessible via le code peut être modifiée au cours du temps.

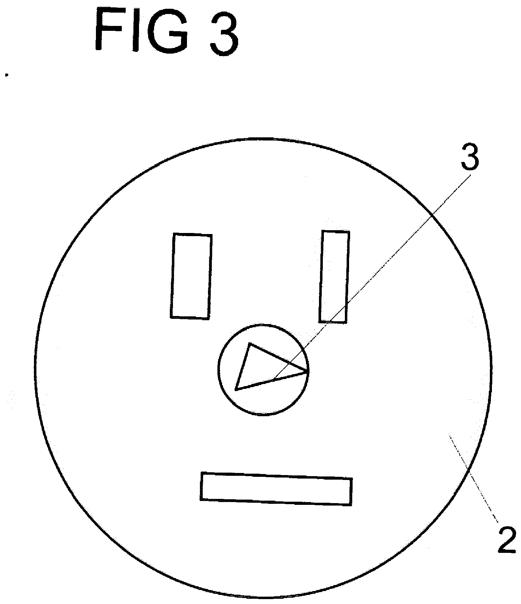

La figure 3 montre un plat décoré sur lequel on peut deviner une face humaine stylisée. La partie représentant le nez constitue le code 3.

On s'affranchit donc des codes du type code barre ou QR codes qui visuellement ne se confondent pas avec un élément décoratif que peut présenter un objet.

## Revendications

1. Système de diffusion d'informations comprenant un objet(2), un code (3) d'identification de l'objet présenté sur une zone non plane de l'objet, un moyen (5) de reconnaissance du code, un moyen (6)de mise en relation de l'information correspondant au code avec un moyen (7)de diffusion de la dite information, ce système étant **caractérisé en ce que** le code (3) est non détachable de l'objet et il est issu d'un élément décoratif de l'objet construit à partir d'un dessin de l'élément décoratif et reconnu par reconnaissance visuelle.

2. Système de diffusion d'une information selon la revendication 1**caractérisé en ce que** le code (3) est au moins une partie du dessin de l'élément décoratif.

3. Système de diffusion d'une information selon la revendication 1 **caractérisé en ce que** le code est un élément décoratif en 2D.

4. Système de diffusion d'une information selon la revendication 1 **caractérisé en ce que** le code est un élément décoratif en 3D.

5. Système de diffusion d'une information selon la revendication 1 **caractérisé en ce que** le code est une combinaison de pantone.

6. Système de diffusion d'une information selon la revendication 1 **caractérisé en ce que** le code est issu d'un dessin original traité pour constituer une image enrichie.

7. Système de diffusion d'une information selon l'une quelconque des revendications 1 à 5 **caractérisé en ce que** l'objet est un objet de la vie courante.
